# EUROPEAN PATENT APPLICATION

(11) **EP 4 311 072 A1**
(43) Date of publication of application: **24.01.2024**
(21) Application number: 23179157.5
(22) Date of filing: 14.06.2023
(51) Int. Cl.: H02J 7/00, H02J 50/10

(54) **EFFICIENT ARCHITECTURE FOR A WIRELESS BATTERY PACK WITH SELF-CHARGING CAPABILITY**

(30) Priority: 14.07.2022 US 202217812671
(71) Applicant: Hand Held Products, Inc., Charlotte, NC 28202 (US)
(72) Inventor: SKVORETZ, Matthew A., Charlotte, 28202 (US)
(74) Representative: Haseltine Lake Kempner LLP

(57) **Abstract**

An efficient architecture for a battery pack capable of wirelessly charging is provided. An example battery pack may include a wireless power receiver, a battery electrically connected to the wireless power receiver, and a processor electrically connected to the wireless power receiver. In addition, the processor may configure an electrical output of the wireless power receiver, based at least in part on a charge level of the battery, such that an output voltage and an output current are updated in coordination with a predetermined charging profile. The battery pack, capable of charging via a wireless power charger, may further include a housing, wherein the housing encloses the battery, the processor, and the wireless power receiver.

## Description

### TECHNOLOGICAL FIELD

Embodiments of the present disclosure relate generally to a battery capable of wirelessly charging, and more particularly, to an efficient architecture for providing wireless charging capability to a battery.

### BACKGROUND

Applicant has identified many technical challenges and difficulties associated with circuitry utilized to provide wireless charging capabilities to a battery. Through applied effort, ingenuity, and innovation, Applicant has solved problems related to wireless charging circuitry architecture by developing solutions embodied in the present disclosure, which are described in detail below.

### BRIEF SUMMARY

Various embodiments are directed to an example battery pack, computer program product, and method for controlling battery charging in a wireless charging capable battery pack.

In accordance with some embodiments of the present disclosure, an example battery pack is provided. In some embodiments, the battery pack may comprise a wireless power receiver, a battery electrically connected to the wireless power receiver, and a processor electrically connected to the wireless power receiver. Further, the processor may configure an electrical output of the wireless power receiver, based at least in part on a charge level of the battery, such that an output voltage and an output current are updated in coordination with a predetermined charging profile.

In some embodiments, the battery pack may further comprise a housing, wherein the housing encloses the battery, the processor, and the wireless power receiver.

In some embodiments, the battery pack may further comprise a housing, wherein the housing encloses the battery, the processor, and the wireless power receiver.

In some embodiments, the predetermined charging profile may be selected based on a chemical composition of the battery.

In some embodiments, the predetermined charging profile may comprise at least a constant current stage and a constant voltage stage.

In some embodiments, the constant current stage may comprise at least a first constant current stage and a second constant current stage, wherein a first current supplied to the battery in the first constant current stage is less than a second current supplied to the battery in the second constant current stage.

In some embodiments, an operating power may be supplied to the processor that is not regulated by a low-dropout voltage regulator.

In some embodiments, the operating power supplied to the processor may be supplied by the battery.

In some embodiments, the processor may transmit control messages to the wireless power receiver to regulate the output voltage and the output current supplied by the wireless power receiver to the battery.

An example computer program product for controlling battery charging is further provided. In some embodiments, the computer program product may comprise at least one non-transitory computer-readable storage medium having computer-readable program code portions stored therein. In some embodiments, the computer-readable program code portions may comprise an executable portion configured to receive, at a processor, a charge value corresponding to a charge level of a battery; determine a charge state according to a predetermined charging profile, corresponding to the charge value; determine an output voltage and an output current based at least in part on the charge value and the predetermined charging profile; and configure an electrical output of a wireless power receiver, to produce power according to the output voltage and output current.

In some embodiments, a housing may enclose the battery, the processor, and the wireless power receiver.

In some embodiments, the predetermined charging profile may comprise at least a constant current stage and a constant voltage stage.

In some embodiments, the constant current stage may comprise at least a first constant current stage and a second constant current stage, wherein a first current supplied to the battery in the first constant current stage is less than a second current supplied to the battery in the second constant current stage.

In some embodiments, the constant voltage stage may comprise reducing the output current of the wireless power receiver to maintain a constant output voltage.

An example method for controlling battery charging in a wireless battery pack is also provided. In some embodiments, the method for controlling battery charging in a wireless battery pack may comprise receiving, at a processor, a charge value corresponding to a charge level of a battery; determining a charge state according to a predetermined charging profile, corresponding to the charge value; determining an output voltage and an output current based at least in part on the charge value and the predetermined charging profile; and configuring an electrical output of a wireless power receiver, to produce power according to the output voltage and output current.

In some embodiments, a housing may enclose the battery, the processor, and the wireless power receiver.

In some embodiments, the predetermined charging profile may comprise at least a constant current stage and a constant voltage stage.

In some embodiments, the constant current stage may comprise at least a first constant current stage and a second constant current stage, wherein a first current supplied to the battery in the first constant current stage is less than a second current supplied to the battery in the second constant current stage.

In some embodiments, the constant voltage stage may comprise reducing the output current of the wireless power receiver to maintain a constant output voltage.

In some embodiments, an operating power may be supplied to the processor that is not regulated by a low-dropout voltage regulator.

In some embodiments, the operating power supplied to the processor may be provided by the battery.

### BRIEF DESCRIPTION OF THE DRAWINGS

Reference will now be made to the accompanying drawings. The components illustrated in the figures may or may not be present in certain embodiments described herein. Some embodiments may include fewer (or more) components than those shown in the figures in accordance with an example embodiment of the present disclosure.
FIG. 1 illustrates an example block diagram of a prior art architecture for wireless charging of a battery.
FIG. 2 illustrates an example block diagram of a wireless battery pack in accordance with an example embodiment of the present disclosure.
FIG. 3 illustrates another example block diagram of a wireless battery pack in accordance with an example embodiment of the present disclosure.
FIG. 4 depicts an example battery pack charge curve in accordance with an example embodiment of the present disclosure.
FIG. 5 illustrates an example block diagram showing example components of a wireless power controller in accordance with an example embodiment of the present disclosure.
FIG. 6 depicts a flowchart illustrating example operations performed by a wireless power controller in accordance with an example embodiment of the present disclosure.
FIG. 7 depicts a flowchart illustrating example outcomes of the wireless power controller based on the state of the wireless battery charging battery pack in accordance with an example embodiment of the present disclosure.

### DETAILED DESCRIPTION

Example embodiments will be described more fully hereinafter with reference to the accompanying drawings, in which some, but not all embodiments of the inventions of the disclosure are shown. Indeed, embodiments of the disclosure may be embodied in many different forms and should not be construed as limited to the embodiments set forth herein; rather, these embodiments are provided so that this disclosure will satisfy applicable legal requirements. Like numbers refer to like elements throughout.

Various example embodiments address technical problems with the architecture generally utilized to provide wireless charging capability to a battery. More specifically, the architecture generally used to provide wireless charging capabilities may be too bulky for a number of applications. As understood by those of skill in the field to which the present disclosure pertains, there are numerous example scenarios in which a user may need to provide wireless charging capabilities to a battery with limited space constraints.

For example, many devices relying on power from a rechargeable battery were designed and manufactured without wireless charging capabilities. Some of these devices may have been designed or manufactured before wireless charging was feasible or prevalent. Others may have been manufactured without wireless charging capabilities due to space, cost, or manufacturing restraints. Users of these devices, manufactured without wireless charging capabilities, may greatly benefit from the ability to add wireless charging functionality, especially in the use of mobile devices.

However, it can be difficult or impossible to add the necessary circuitry to add wireless charging functionality to an existing device. Most mobile devices have limited space within the device case or battery compartment. In addition, many manufacturers will not, or cannot modify the form factor of the device to add additional space for the necessary circuitry. Further, attempting to attach the circuitry on an external surface of the device may be cumbersome and uncomely. Adding to the problem is the fact that the traditional circuitry required to add wireless power functionality comprises a sizable list of components, including a wireless power receiver, a microcontroller with low-dropout regulator (LDO), a battery charger integrated circuit (IC), battery protection circuitry, sense resistor, thermistor, etc.

The various example embodiments described herein utilize various techniques to reduce the size of the circuitry necessary to add wireless power capabilities to an existing device. For example, in some embodiments, the battery charger IC may be removed from the wireless power circuitry. In order to remove the battery charger IC, the microcontroller or processor may need to be programmed to mimic the functionality of the battery charger IC. This includes regulating the current and voltage supplied to the battery in accordance with a standard charge profile based on the chemical composition of the battery pack. In addition, in some embodiments, the LDO may be removed by utilizing a processor with a wider input voltage tolerance and/or by providing power to the processor from the battery which generally maintains a narrower output voltage range. Removing the battery charger IC and/or the LDO may allow the entirety of the wireless power circuitry to be enclosed in a package with the battery, and fit into the existing battery compartment, allowing wireless charging capability to be added without altering the form factor of the existing device.

As a result of the herein described example embodiments and in some examples, wireless charging functionality may be added to numerous devices relying on rechargeable battery power, without sacrificing the look and/or functionality of the previously designed and manufactured form factor.

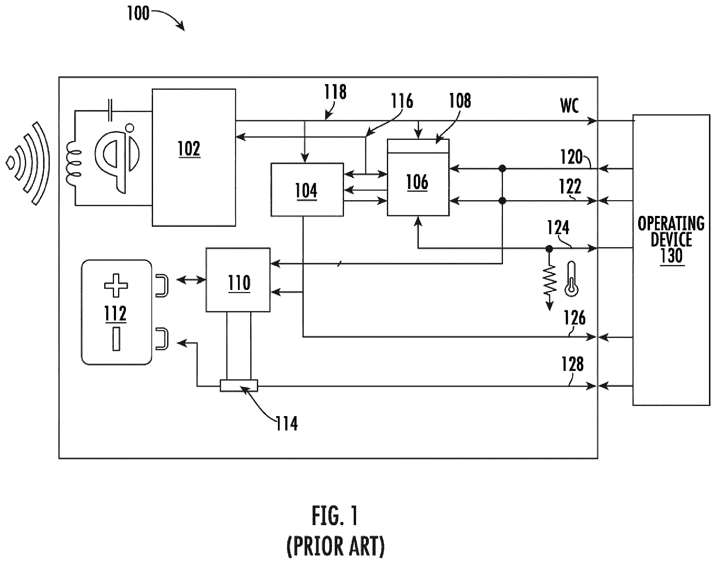

Referring now to FIG. 1, an example block diagram of a prior art architecture for a wireless charging battery pack 100 is provided. As shown in FIG. 1, the example wireless charging battery pack 100 includes a wireless power receiver 102 providing output power to charge a battery 112. Before the power arrives at the battery 112, it must first pass through battery charger circuitry 104 which regulates the voltage and current of the output power in accordance with a predetermined charging profile. The provided charging power must further pass through battery protection circuitry 110 before reaching the battery 112.

In addition, the depicted prior art wireless charging battery pack 100 of FIG. 1 further includes battery microprocessor 106 communicatively connected to the battery charger circuitry 104 and the wireless power receiver 102 through the serial communication bus 116. Prior art implementations included serial communication connections to the wireless power receiver 102 to determine status related to the wireless link of the wireless power receiver 102.

Further, the battery microprocessor 106 receives output power from the wireless power receiver 102 with the aid of a LDO 108 which receives the output power from the wireless power receiver 102 and regulates the power to an input level required by the battery microprocessor 106. The wireless charging battery pack 100 is additionally electrically and communicatively connected to the operating device 130, utilizing serial clock 120 and serial data 122 connections to serially communicate and receive communication from the operating device 130; and providing power through the wireless DC power output 118 and the battery power terminals 126/128. A thermistor 124 is also electrically connected to the battery microprocessor 106 and the operating device 130 to provide thermal monitoring capabilities of the battery microprocessor 106. Finally, a sense resistor 114 is electrically connected between the battery 112 and the operating device 130 to gauge the flow of current from the battery 112.

As depicted in FIG. 1, an example prior art wireless charging battery pack 100 includes battery charger circuitry 104. The battery charger circuitry 104 receives power from a DC input source, such as the wireless power receiver 102, and uses it to charge the battery. The battery charger circuitry 104 employs circuitry to modulate the power input to control the output voltage and current provided to the battery protection circuitry 110 and eventually to the battery 112. A typical battery charger circuitry 104 may comprise a linear charger, a pulse charger, a buck boost charger, a switch-mode charger, or other similar device. In prior art methods, a battery charger circuitry 104 may control the voltage and current provided to the battery 112. In addition, the battery charger circuitry 104 provides status of charging as well as voltage, current, and temperature readings of the battery 112.

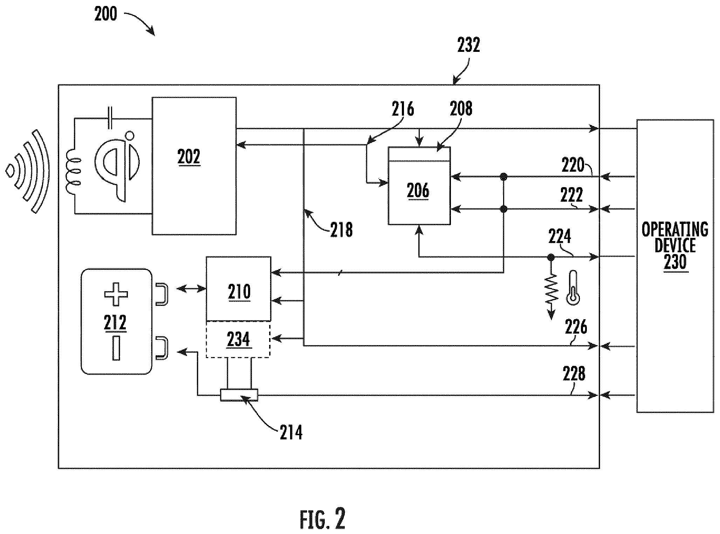

Referring now to FIG. 2 the architecture of an example wireless charging battery pack 200 in accordance with an example embodiment of the present disclosure is provided. Similar to FIG. 1, the example wireless charging battery pack 200 of FIG. 2, also includes a battery microprocessor 206 receiving operating power from the wireless power receiver 202 through a LDO 208 and communicatively connected to the wireless power receiver 202 through a receiver serial communication bus 216. In addition, the wireless power receiver 202 provides operating power to the operating device 230 via the wireless DC power output 218. Also, similar to FIG. 1, the example wireless charging battery pack 200 of FIG. 2 is communicatively connected to the operating device 230 by signals serial clock 220 and serial data 222. Further, battery power is provided to the operating device 230 by the battery 212 through the battery power terminals 226/228. However, the depicted embodiment of FIG. 2 does not include battery charger circuitry 104. Instead, the wireless DC power output 218 of the wireless power receiver 202 is connected directly to the battery protection circuitry 210 which subsequently provides charging power to the battery 212. The wireless charging battery pack 200 of FIG. 2, further shows, as in FIG. 1, a sense resistor 214 between the battery 212 and the operating device 230, as well as a thermistor 224 electrically connected to the battery microprocessor 206 and the operating device 230.

As depicted in FIG. 2, the example wireless charging battery pack 200 includes a wireless power receiver 202. A wireless power receiver 202 may be any integrated circuit, printed circuit board (PCB), application-specific integrated circuit (ASIC), or other circuitry capable of receiving power through wireless means (e.g., magnetic induction) and transmitting power to a battery (e.g., battery 212) for charging. In addition, a wireless power receiver 202 may receive communication, for example, through a serial communication bus (e.g., receiver serial communication bus 216) enabling configuration of the power output parameters of the wireless power receiver 202. As depicted in FIG. 2, this communication is provided by the battery microprocessor 206. A wireless power receiver 202 may be configured through the communication interface to adjust the power output parameters of the wireless power receiver 202 to comply with a pre-determined charge profile based on the chemical composition of the battery 212, for example, a standard lithium-ion charge profile. In some embodiments, the adjustable power output parameters of the wireless power receiver 202 may include the output voltage and current on the wireless DC power output 218. The wireless power receiver 202 may be continually updated to adjust the power output parameters according to the pre-determined charge profile. A wireless power receiver 202 may additionally utilize the receiver serial communication bus 216 to communicate data to the battery microprocessor 206, for example, the current output voltage and the current output current of the wireless power receiver 202 on the wireless DC power output 218.

As further shown in FIG. 2, the output power (e.g., wireless DC power output 218) from the wireless power receiver 202 is provided directly to the battery protection circuitry 210. Utilizing the battery microprocessor 206 to control the power output parameters of the wireless power receiver 202 enables wireless power to be received and transmitted to the battery 212 without the use of a battery charger circuitry 104 as was necessary in the prior art architecture of FIG. 1. Removing the battery charger circuitry 104 reduces the overall size of the wireless power circuitry and the overall size of the wireless charging battery pack 200, making it possible to fit the wireless charging battery pack 200 in existing form factors and in some embodiments, allowing a user or manufacturer to increase the size of the battery in the device. As further depicted, the wireless power receiver 202 may provide power to the operating device 230 through the wireless DC power output 218 circuitry.

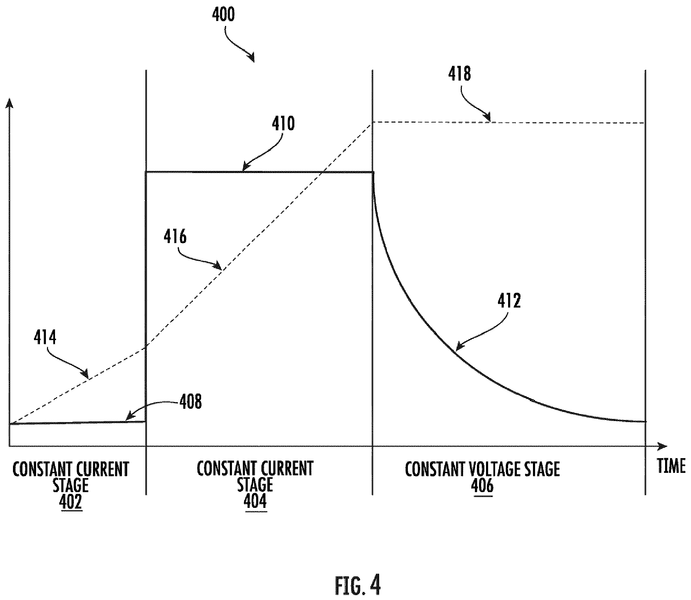

The example wireless charging battery pack 200, as shown in FIG. 2, further depicts a battery microprocessor 206 receiving power input from the wireless power receiver 202 through a LDO 208. In addition, the depicted battery microprocessor 206 is communicatively connected to the wireless power receiver 202 through the receiver serial communication bus 216 and communicatively connected to the operating device 230 through the serial clock 220 and serial data 222 serial communication lines. A battery microprocessor 206 may be any device comprising hardware, software, firmware, or any combination thereof, capable of receiving values representing the power output of the wireless power receiver 202 and/or data representing the current state of the wireless charging battery pack 200. Utilizing the input parameters representing the power output of the wireless power receiver 202 and the current state of the wireless charging battery pack 200 and/or using the terminal voltage at the battery 212 provided by the battery protection circuitry 210, a battery microprocessor 206 determines the charge stage of the battery 212. The charge state of the battery 212 determines the output parameters of the wireless power receiver 202 as provided by a pre-determined charging profile (e.g., the standard lithium-ion charge profile) as described with reference to FIG. 4. In addition, the battery microprocessor 206 may communicate with the operating device 230 through the serial data signals 220/222. Communication with the operating device 230 may provide the battery microprocessor 206 with further insight into the power state of the battery 212. Further, a battery microprocessor 206 may receive information regarding the thermal properties of the wireless power circuitry via a thermistor 224 electrically connected to the battery microprocessor 206. Details related to the thermal condition of the wireless charging battery pack 200 may further dictate the desired output power parameters of the wireless power receiver 202 as determined by the battery microprocessor 206. By receiving the voltage value, representative of the output voltage of the wireless power receiver 202, and the current value, representative of the output current of the wireless power receiver 202, as well as other data related to the state of the wireless charging battery pack 200, through the receiver serial communication bus 216, the battery microprocessor 206 may determine charge level of the battery and the output power parameters of the wireless power receiver 202 in accordance with a predetermined profile, and configure the electrical output of the wireless power receiver 202 based on those determinations.

As further shown in FIG. 2, the battery microprocessor 206 is coupled to a LDO 208 to regulate the input voltage to the battery microprocessor 206. A LDO 208 may be any circuitry or device that receives DC power input and regulates that input to match the input requirement of the coupled device, here, the battery microprocessor 206. The LDO 208 may be utilized to provide a constant power source to an electronic device when the output power parameters of the ultimate power source do not match the input power requirements of the coupled device. For example, a wireless power receiver 202 may provide output power on wireless DC power output 218 anywhere from 3 volts to 9 volts, however, the battery microprocessor 206 may require an input voltage of 1.8 volts. The LDO 208 may be used to regulate the input power and provide a constant 1.8 volt input power to the battery microprocessor 206. If the battery microprocessor 206 was provided input power directly from the wireless power receiver 202 without the regulation of the LDO 208, the circuitry in the battery microprocessor 206 may be damaged by overpowering the circuitry components.

As depicted in FIG. 2, the example wireless charging battery pack 200 also includes battery protection circuitry 210. The battery protection circuitry 210 may be any hardware, firmware, or other circuitry that monitors the charge state of the battery 212 to protect the battery 212 against under charging, over charging, over current, over voltage, and similar input power problems that could damage the battery 212. In addition, the battery protection circuitry 210 monitors the temperature and other state of the battery 212 and updates input power parameters based on the battery 212 state. In some embodiments, the battery protection circuitry 210 may communicate the charge state to the battery microprocessor 206 in order for the battery microprocessor 206 to determine and configure the output power parameters of the wireless power receiver 202. In such embodiments, the charge state, and other parameters related to the state of the battery 212 may be provided to the battery microprocessor 206 via the serial communication bus utilizing the serial clock 220 and serial data 222 signals. In some embodiments, the battery protection circuitry 210 may use a sense resistor 214 to gauge the flow of current from the battery 212. The sense resistor 214 may enable the battery protection circuitry 210 to determine the output current and other parameters related to the charge state of the battery 212. In addition, the battery protection circuitry 210 may determine a charge level corresponding to the voltage across the terminals of the battery 212. This and other information may be communicated to the battery microprocessor 206.

As further depicted in FIG. 2, the example wireless charging battery pack 200 includes a battery 212. A battery 212 may comprise any lithium-ion battery, any lithium-polymer battery, an alkaline battery, or the like. In various examples, the battery 212 supplies power to facilitate operations of the operating device 230. In general, the battery 212 utilizes a chemical reaction to supply power to produce the output power supply. The battery 212 may be susceptible to damage leading to reduced battery life and/or permanent damage from mechanical, electrical, and/or thermal stress. Examples of electrical abuse/stress may include overcharging, over-discharging, external short circuits, and/or the like. To avoid electrical stress and prolong the life of a battery 212, a charging curve based on the chemical composition of the battery may be determined. As explained further in relation to FIG. 4, the charging curve may regulate the input voltage and current of the battery 212 for the current charge state of the battery 212.

Many of the batteries 212 which may benefit from the present disclosure may be used to power devices that do not support wireless power charging. By reducing the size of the wireless power circuitry, wireless power charging capabilities can be provided to the battery 212 itself while still allowing the battery to be used in the same or similar form factor. In some embodiments, a wireless charging battery pack 200 may be packaged in a battery pack housing 232 such that the battery 212 and the wireless power charging components are housed in a single package. In some embodiments, the battery pack housing 232 may be a rigid structure into which the battery 212 and the wireless power charging components are fit. In some embodiments, the battery pack housing 232 may be a plastic cover, material, shrink wrap, or other similar material that attaches the wireless power circuitry to an external surface of the battery 212. Incorporating the battery 212 and the wireless power circuitry into a housing may enable the battery 212 to fit within the previously manufactured battery compartment form factor with little or no reduction in the battery 212 capacity.

As further depicted in the example embodiment of FIG. 2, a receiver serial communication bus 216 may enable communication between the wireless power receiver 202 and the battery microprocessor 206. The receiver serial communication bus 216 of FIG. 2 may be any serial communication channel capable of low power transmission of data, such as an inter-integrated circuit (I²C). The receiver serial communication bus 216 enables communication between the battery microprocessor 206 and the wireless power receiver 202. Enabling the battery microprocessor 206 to configure the electrical output of the wireless power receiver 202 and further enabling the wireless power receiver 202 to provide state information in regard to the electrical output of the wireless power receiver 202 (e.g., voltage values and current values). In some embodiments, the receiver serial communication bus 216, or similar serial bus may enable communication between the battery microprocessor 206 and the battery protection circuitry 210. In such embodiments, the battery protection circuitry 210 may provide state information related to the electrical output of the wireless power receiver 202 and/or the charge state of the battery 212, such as the charge level (e.g., voltage across the terminals) of the battery 212.

Similarly, as depicted in FIG. 2, the battery microprocessor 206 and other devices may communicate with the operating device 230 through serial communication lines enabled by serial clock 220 and serial data 222. The operating device 230 may provide configuration data and/or state data to the battery microprocessor 206 which may play an integral part in the determination of the output power parameters of the wireless power receiver 202. Further, the battery microprocessor 206 may provide state information to the operating device 230, integral to the operation of the operating device 230.

As shown in FIG. 2, the example wireless charging battery pack 200 includes a wireless DC power output 218 line transmitting power from the wireless power receiver 202 to the battery 212, the operating device 230, the battery microprocessor 206, and other connected devices. As described above, in the example embodiment of the wireless charging battery pack 200, the battery microprocessor 206 may configure the wireless power receiver 202 to regulate the output current and the output power of the wireless power receiver 202 onto the wireless DC power output 218 lines.

FIG. 2 further depicts a thermistor 224 electrically connected to the battery microprocessor 206 and the operating device 230. The thermistor 224 may provide data related to the thermal state of the wireless charging battery pack 200. Thermal data may be utilized by the battery microprocessor 206 when determining the output power parameters of the wireless power receiver 202. For example, if the operating temperature of the wireless charging battery pack 200 is above a pre-determined threshold, the battery microprocessor 206 may determine that the output power parameters from the wireless power receiver 202 need to be reduced, or even that the wireless power receiver 202 may need to be turned off. As an example, in some embodiments, the thermistor 224, may be configured to measure the cell temperature of the battery 212. The cell temperature of the battery 212 may play a key role in determining the charge parameters (e.g., voltage and current) provided by the wireless power receiver 202. For example, in some embodiments, a cold temperature may indicate a need to charge the battery 212 slower than normal; a hot temperature may indicate a need to charge the battery 212 to a lower voltage; and extreme temperatures (hot or cold) may indicate a need to stop charging all together.

As shown in FIG. 2, the example wireless charging battery pack 200 is also connected to an operating device 230. The serial clock 320 may be any device and/or portable electronic device including, but not limited to mobile phones, laptops, wearable devices, and/or the like requiring a power supply from a portable source, such as battery 212. Many operating devices 230 which will benefit from the example embodiments of the present disclosure may not be manufactured to enable wireless power charging. A wireless battery pack, such as wireless charging battery pack 200, may enable wireless power charging for the operating device 230 while still maintaining the current form factor.

As further shown in the example embodiment of FIG. 2, the example wireless charging battery pack 200 includes a gas gauge 234 as an integrated part of the battery protection circuitry 210. A gas gauge 234, may provide historical data related to the health of the battery, for example, cycle counts, rate of discharge, etc. Such historical data may play a role in determining the charge parameters of the battery 212. In some embodiments, the gas gauge 234 may also provide operating parameters related to the battery 212, such as, voltage, current, and temperature. The battery microprocessor 206 may receive the operating parameters from the gas gauge 234 and/or the battery protection circuitry 210 and utilize these parameters to determine the configuration of the wireless power receiver 202. In some embodiments, the gas gauge 234 may be an independent device or circuitry, separate from the battery protection circuitry 210.

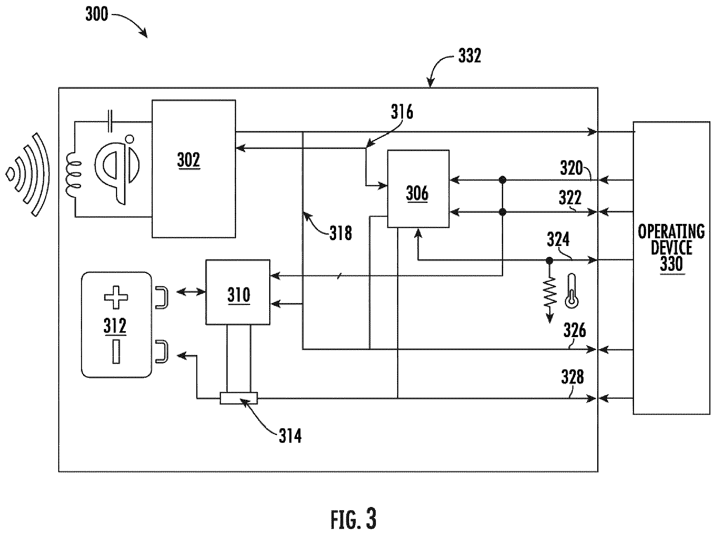

Referring now to FIG. 3, an example wireless charging battery pack 300 in accordance with an example embodiment of the present disclosure is provided. Similar to FIG. 2, the example wireless charging battery pack 300 of FIG. 3, includes a battery microprocessor 306 communicatively connected to the wireless power receiver 302 through a receiver serial communication bus 316 and further communicatively connected to the operating device 330 and the battery protection circuitry 310 through serial communication signals 320/322. Further, similar to FIG. 2, the wireless DC power output 318 of the wireless power receiver 302 is connected directly to the battery protection circuitry 310 which enables charging power to be provided directly from the battery protection circuitry 310 and the battery 312 without the use of a battery charger circuitry 104. The wireless charging battery pack 300 of FIG. 3, further shows, as in FIG. 2, a sense resistor 314 between the battery 312 and the operating device 330, as well as a thermistor 324 electrically connected to the battery microprocessor 306 and the operating device 330. In addition, the wireless power receiver 302 shown in FIG. 3 provides operating power to the operating device 330 via the wireless DC power output 318. Further, battery power is provided to the operating device 330 by the battery 312 through the battery power terminals 326/328. However, the depicted embodiment of FIG. 3 does not include a LDO 208 which enables the battery microprocessor 306 to receive power from the wireless power receiver 302. Instead, the battery microprocessor 306 of FIG. 3 depicts receipt of power from the battery 312 through the battery power terminals 326/328.

As shown in FIG. 3, the example wireless charging battery pack 300 does not include a LDO 208. As described with reference to FIG. 2, a LDO 208 may regulate the power input to the battery microprocessor 206, allowing the battery microprocessor 206 to receive power from the wireless power receiver 202. The LDO 208 regulates the power from the wireless power receiver 202, which may range anywhere from 3 volts to 9 volts, in some embodiments, and provides a constant input power, such as 1.8 volts, to the battery microprocessor 206. However, to further reduce the amount of circuitry and the overall size of the wireless power circuitry of the wireless charging battery pack 300, the depicted wireless charging battery pack 300 of FIG. 3 no longer utilizes an LDO, such as that shown in FIG. 2. Instead, the battery microprocessor 306 shown in FIG. 3 must be a battery microprocessor 306 which supports a range of input power parameters. For example, microprocessors commonly manufactured may support an input voltage range of 1.8 volts to 5.5 volts. By utilizing a microprocessor (e.g., battery microprocessor 306) which supports a range of input voltages, a battery microprocessor 306 may operate without the need for a LDO. However, in general, a microprocessor that supports a range of input voltages wide enough to cover the possible output voltage range of the wireless power receiver 302 (e.g., 3 volts to 9 volts) may not be suitable for purposes of adding wireless power capability to an existing battery. In addition, wireless power from the wireless power receiver 302 is only available when a wireless power transmitter is transmitting power to the wireless power receiver 302. As such, as shown in FIG. 3, the battery 312 may serve as the power source for the battery microprocessor 306 operating without an LDO. In some examples, the battery 312, for example, may have an output voltage range of 2.5 volts to 4.5 volts, which is fully within the operating range of the depicted battery microprocessor 306.

Referring now to FIG. 4, an example predetermined charging profile (e.g. battery pack charge curve 400) is provided. In order to extend the life of a lithium-ion or similar battery and to avoid damage to a battery due to overcharging, manufacturers recommended charging a battery according to a charge profile, for example, the charge profile depicted in FIG. 4. A charge profile may be determined based on the chemical composition (e.g., chemical makeup) of the battery, the output characteristics of the battery, the capacity of the battery, the charger characteristics, or similar physical properties. A processor (e.g., battery microprocessor 206, battery microprocessor 306) may be configured to control the output of the wireless power receiver (e.g., wireless power receiver 202, wireless power receiver 302) based on a predetermined charging profile, such as battery pack charge curve 400.

As shown in FIG. 4, the example battery pack charge curve 400 is comprised of three stages, lower constant current stage 402 (e.g., first constant current stage), higher constant current stage 404 (e.g., second constant current stage), and constant voltage stage 406. The processor will determine the stage of charging based on the terminal voltage of the battery (e.g., battery 212, battery 312) and continually configure the outputs of the wireless power receiver (e.g., wireless power receiver 202, wireless power receiver 302) based on the position in the predetermined profiled (e.g., battery pack charge curve 400). In some embodiments, the transition between the stages will be made based on a predetermined threshold voltage. For example, a lithium-ion battery with a capacity of 5 volts may have a first threshold voltage of 3 volts (e.g., transition line 420) and a second threshold voltage of 4 volts (e.g., transition line 422). If the processor determines based on data from the wireless power receiver and/or the battery protection circuitry, that the voltage of the battery is less than 3 volts, the processor start charging in lower constant current stage 402 and configure the wireless power receiver to output at a low constant current (e.g., first output current 408). During the lower constant current stage 402, the voltage of the battery will increase at a first charging rate 414. Once the processor determines the voltage of the battery is at or above the first threshold voltage (e.g., transition line 420), the processor may move into higher constant current stage 404 and configure the wireless power receiver to output power at a higher current (e.g., second output current 410). During the higher constant current stage 404, the voltage of the battery will increase at a second charging rate 416. When the processor determines the battery voltage has exceeded the second threshold voltage (e.g., transition line 422) the processor may move into constant voltage stage 406, and continually configure the output current of the wireless power receiver to maintain a constant voltage (e.g., constant voltage 418). During the constant voltage stage 406, the output current may fluctuate to maintain the constant voltage 418, and may adjust similar to the output current line variable output current 412, depicted in FIG. 4.

The predetermined threshold voltages (e.g., transition line 420, transition line 422), as defined by the predetermined charging profile may depend on the physical characteristics of the battery (e.g., the chemical composition, capacity, etc.). For example, a lithium-ion battery with a capacity of 5 volts may have a first threshold voltage of 3 volts and a second threshold voltage of 4 volts.

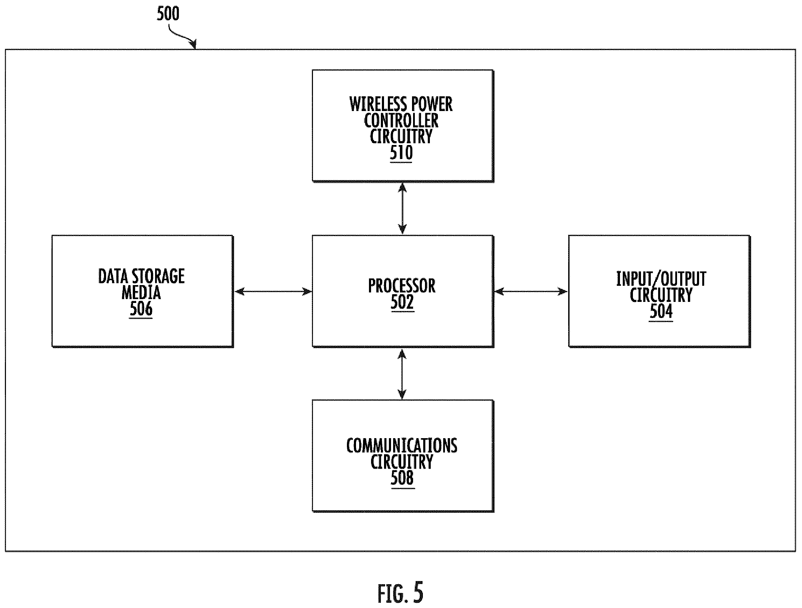

FIG. 5 illustrates an example battery microprocessor apparatus in accordance with at least some example embodiments of the present disclosure. Specifically, FIG. 5 depicts an example battery microprocessor apparatus 500 specially configured in accordance with at least some example embodiments of the present disclosure. In some embodiments, the battery microprocessor (e.g., battery microprocessor 206, battery microprocessor 306) and/or a portion thereof is embodied by one or more system(s), such as the battery microprocessor apparatus 500 as depicted and described in FIG. 5. The battery microprocessor apparatus 500 includes processor 502, input/output circuitry 504, data storage media 506, communications circuitry 508, and wireless power controller circuitry 510. In some embodiments, the battery microprocessor apparatus 500 is configured, using one or more of the sets of circuitry 502, 504, 506, 508, and/or 510, to execute and perform the operations described herein.

Although components are described with respect to functional limitations, it should be understood that the particular implementations necessarily include the use of particular computing hardware. It should also be understood that in some embodiments certain of the components described herein include similar or common hardware. For example, two sets of circuitry may both leverage use of the same processor(s), network interface(s), storage medium(s), and/or the like, to perform their associated functions, such that duplicate hardware is not required for each set of circuitry. The user of the term "circuitry" as used herein with respect to components of the apparatuses described herein should therefore be understood to include particular hardware configured to perform the functions associated with the particular circuitry as described herein.

Particularly, the term "circuitry" should be understood broadly to include hardware and, in some embodiments, software for configuring the hardware. For example, in some embodiments, "circuitry" includes processing circuitry, storage media, network interfaces, input/output devices, and/or the like. Alternatively or additionally, in some embodiments, other elements of the battery microprocessor apparatus 500 provide or supplement the functionality of other particular sets of circuitry. For example, the processor 502 in some embodiments provides processing functionality to any of the sets of circuitry, the data storage media 506 provides storage functionality to any of the sets of circuitry, the communications circuitry 508 provides network interface functionality to any of the sets of circuitry, and/or the like.

In some embodiments, the processor 502 (and/or co-processor or any other processing circuitry assisting or otherwise associated with the processor) is/are in communication with the data storage media 506 via a bus for passing information among components of the battery microprocessor apparatus 500. In some embodiments, for example, the data storage media 506 is non-transitory and may include, for example, one or more volatile and/or non-volatile memories. In other words, for example, the data storage media 506 in some embodiments includes or embodies an electronic storage device (e.g., a computer readable storage medium). In some embodiments, the data storage media 506 is configured to store information, data, content, applications, instructions, or the like, for enabling the battery microprocessor apparatus 500 to carry out various functions in accordance with example embodiments of the present disclosure.

The processor 502 may be embodied in a number of different ways. For example, in some example embodiments, the processor 502 includes one or more processing devices configured to perform independently. Additionally or alternatively, in some embodiments, the processor 502 includes one or more processor(s) configured in tandem via a bus to enable independent execution of instructions, pipelining, and/or multithreading. The use of the terms "processor" and "processing circuitry" should be understood to include a single core processor, a multi-core processor, multiple processors internal to the battery microprocessor apparatus 500, and/or one or more remote or "cloud" processor(s) external to the battery microprocessor apparatus 500.

In an example embodiment, the processor 502 is configured to execute instructions stored in the data storage media 506 or otherwise accessible to the processor. Alternatively or additionally, the processor 502 in some embodiments is configured to execute hard-coded functionality. As such, whether configured by hardware or software methods, or by a combination thereof, the processor 502 represents an entity (e.g., physically embodied in circuitry) capable of performing operations according to an embodiment of the present disclosure while configured accordingly. Alternatively or additionally, as another example in some example embodiments, when the processor 502 is embodied as an executor of software instructions, the instructions specifically configure the processor 502 to perform the algorithms embodied in the specific operations described herein when such instructions are executed.

As one particular example embodiment, the processor 502 is configured to perform various operations associated with determining the power output parameters based on the charge state of the battery (e.g., battery 212, battery 312) and the predetermined charging profile (e.g., battery pack charge curve 400) and configure the wireless power receiver (e.g., wireless power receiver 202, wireless power receiver 302) power output parameters based on the determined power output parameters. In some embodiments, the processor 502 includes hardware, software, firmware, and/or a combination thereof, that receives a charge value corresponding to a charge level of a battery. Additionally or alternatively, in some embodiments, the processor 502 includes hardware, software, firmware, and/or a combination thereof, that determines a charge state according to a predetermined charging profile, corresponding to the charge value. Additionally or alternatively, in some embodiments, the processor 502 includes hardware, software, firmware, and/or a combination thereof, that determines an output voltage and an output current based at least in part on the charge value and the predetermined charging profile. Additionally or alternatively, in some embodiments, the processor 502 includes hardware, software, firmware, and/or a combination thereof, that configures an electrical output of the wireless power receiver, to produce power according to the determined output voltage and output current.

In some embodiments, the battery microprocessor apparatus 500 includes input/output circuitry 504 that provides output to the user and, in some embodiments, to receive an indication of a user input. In some embodiments, the input/output circuitry 504 is in communication with the processor 502 to provide such functionality. The input/output circuitry 504 may comprise one or more user interface(s) (e.g., user interface) and in some embodiments includes a display that comprises the interface(s) rendered as a web user interface, an application user interface, a user device, a backend system, or the like. The processor 502 and/or input/output circuitry 504 comprising the processor may be configured to control one or more functions of one or more user interface elements through computer program instructions (e.g., software and/or firmware) stored on a memory accessible to the processor (e.g., data storage media 506, and/or the like). In some embodiments, the input/output circuitry 504 includes or utilizes a user-facing application to provide input/output functionality to a client device and/or other display associated with a user.

In some embodiments, the battery microprocessor apparatus 500 includes communications circuitry 508. The communications circuitry 508 includes any means such as a device or circuitry embodied in either hardware or a combination of hardware and software that is configured to receive and/or transmit data from/to a network and/or any other device, circuitry, or module in communication with the battery microprocessor apparatus 500. In this regard, the communications circuitry 508 includes, for example in some embodiments, a network interface for enabling communications with a wired or wireless communications network. Additionally or alternatively in some embodiments, the communications circuitry 508 includes one or more network interface card(s), antenna(s), bus(es), switch(es), router(s), modem(s), and supporting hardware, firmware, and/or software, or any other device suitable for enabling communications via one or more communications network(s). Additionally or alternatively, the communications circuitry 508 includes circuitry for interacting with the antenna(s) and/or other hardware or software to cause transmission of signals via the antenna(s) or to handle receipt of signals received via the antenna(s). In some embodiments, the communications circuitry 508 enables transmission to and/or receipt of data from a client device in communication with the battery microprocessor apparatus 500.

The wireless power controller circuitry 510 includes hardware, software, firmware, and/or a combination thereof, that supports various functionality associated with receiving state information from various sources via a serial communication bus, for example, the wireless power receiver (e.g., wireless power receiver 202, wireless power receiver 302); the battery protection circuitry (e.g., battery protection circuitry 210, battery protection circuitry 310); the operating device (e.g., operating device 230, operating device 330); and the thermistor (e.g., thermistor 224, thermistor 324). In addition, the wireless power controller circuitry 510 includes hardware, software, firmware, and/or a combination thereof, that supports additional functionality associated with determining a charge state of the battery (e.g., battery 212, battery 312), determining power output parameters according to a predetermined charge profile (e.g., battery pack charge curve 400), and configuring the wireless power receiver to output power according to the determined power output parameters. Additionally, or alternatively the wireless power controller circuitry 510 includes hardware, software, firmware, and/or a combination thereof, that prepares and/or transmits electronic data signals to activate mitigating actions, for example, electronic signals to trigger actuating elements, alter the state of switches, configure and/or reconfigure mitigation devices, and/or the like. In some embodiments, the wireless power controller circuitry 510 includes a separate processor, specially configured field programmable gate array (FPGA), or a specially programmed application-specific integrated circuit (ASIC).

Additionally or alternatively, in some embodiments, one or more of the sets of circuitry 502-510 are combinable. Additionally or alternatively, in some embodiments, one or more of the sets of circuitry perform some or all of the functionality described associated with another component. For example, in some embodiments, one or more sets of circuitry 502-510 are combined into a single module embodied in hardware, software, firmware, and/or a combination thereof. Similarly, in some embodiments, one or more of the sets of circuitry, for example wireless power controller circuitry 510, is/are combined such that the processor 502 performs one or more of the operations described above with respect to each of these circuitry individually.

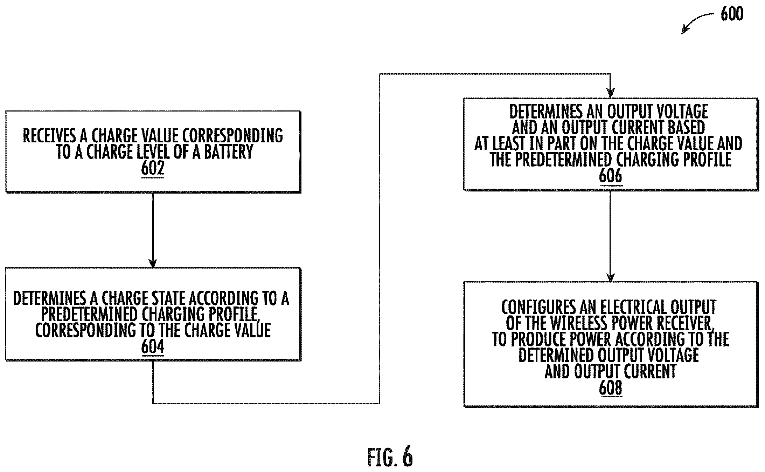

Referring now to FIG. 6, an example flow diagram illustrating an example method 600 for configuring the power output parameters of a wireless power receiver (e.g., wireless power receiver 202, wireless power receiver 302) is illustrated, in accordance with some embodiments of the present disclosure. The example method 600 starts at block 602 when a battery microprocessor 206, 306 receives a charge value corresponding to a charge level of a battery. As described in relation to FIG. 2 and FIG. 3, a battery microprocessor 206, 306 may receive information related to the power output parameters of the batteries 212, 312 through serial communication, such as through the receiver serial communication bus 216, 316 originating from the wireless power receiver 202, 302 and/or through the serial communication lines originating from the battery protection circuitry 210, 310. The received information may include information related to the charge state of the batteries 212, 312, such as the terminal voltage of the battery 212, 312.

At block 604, the battery microprocessor 206, 306 determines a charge state according to a predetermined charging profile, corresponding to the charge value. As described in relation to FIG. 4, a predetermined charge profile, such as battery pack charge curve 400, may be determined based on the chemical composition, capacity, and other physical parameters of the battery 212, 312. A battery microprocessor 206, 306 may use the received charge value to determine the charge state or stage the batteries 212, 312, for example, if the battery 212, 312 is in the lower constant current stage 402, the higher constant current stage 404, or the constant voltage stage 406.

At block 606, the battery microprocessor 206, 306 determines an output voltage and an output current based at least in part on the charge value and the predetermined charging profile. As further described in relation to FIG. 4, a battery microprocessor 206, 306 may determine the necessary output voltage and/or output current of the wireless power receiver 202, 302 based on the predetermined charge profile. For example, if, based on the charge level, the battery microprocessor 206, 306 determines the battery 212, 312 is in the higher constant current stage 404, the battery microprocessor 206, 306 may determine the output power of the wireless power receiver 202, 302 may be output at a constant current matching the second output current 410.

At block 608, the battery microprocessor 206, 306 configures an electrical output of the wireless power receiver 202, 302, to produce power according to the determined output voltage and output current. As described in relation to FIG. 2 and FIG. 3, the battery microprocessor 206, 306 may directly configure the wireless power receiver 202, 302 via the receiver serial communication bus 216, 316. Once the battery microprocessor 206, 306 has determined the output power parameters according to the predetermined charging profile, the battery microprocessor 206, 306 may configure the wireless power receiver 202, 302 to output power according to the determined power parameters.

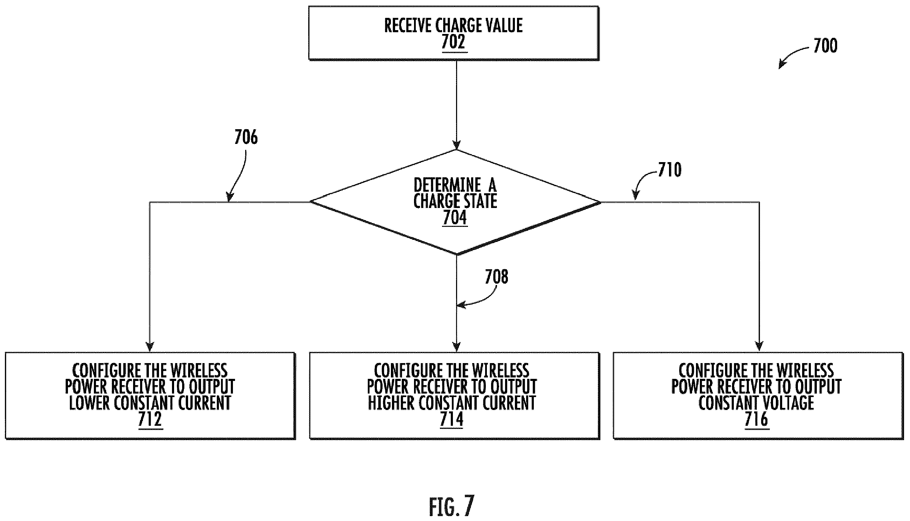

Referring now to FIG. 7, an example charging profile decision algorithm 700 is provided further illustrating example outcomes of the battery microprocessor 206, 306 based on the state of the wireless charging battery pack 200, 300 in accordance with an example embodiment of the present disclosure. As shown in block 702 and described in relation to FIG. 2 and FIG. 3, a battery microprocessor 206, 306 may receive a charge value related to the terminal voltage of the battery 212, 312.

As shown in block 704, a battery microprocessor 206, 306 may use the received charge value to determine a charge state. In some embodiments, such as that depicted in FIG. 4 and further shown in FIG. 7, a battery charge profile may consist of three stages determined based on the charge level, or terminal voltage of the battery 212, 312. If the charge level is at or below a first threshold voltage (e.g., 3 volts), the battery microprocessor 206, 306 will proceed to block 712 and configure the output power parameters of the wireless power receiver 202, 302 such that power is output at a lower constant current (e.g., 0.5 A).

If at block 704, the battery microprocessor 206, 306 determines the charge level is above a first threshold voltage (e.g., 3 volts) but at or below a second threshold voltage (e.g., 4 volts), the battery microprocessor 206, 306 will proceed to block 714 and configure the output power parameters of the wireless power receiver 202, 302 such that power is output at a higher constant current (e.g., 1.2 A).

If at block 704, the battery microprocessor 206, 306 determines the charge level is above a second threshold voltage (e.g., 4 volts), the battery microprocessor 206, 306 will proceed to block 716 and continuously configure the output power parameters of the wireless power receiver 202, 302 such that power is output at a constant voltage (e.g., 4.4 volts) and the current is continuously adjusted to maintain the constant voltage.

Many modifications and other embodiments of the inventions set forth herein will come to mind to one skilled in the art to which these inventions pertain having the benefit of teachings presented in the foregoing descriptions and the associated drawings. Although the figures only show certain components of the apparatus and systems described herein, it is understood that various other components may be used in conjunction with the system. Therefore, it is to be understood that the inventions are not to be limited to the specific embodiments disclosed and that modifications and other embodiments are intended to be included within the scope of the appended claims. Moreover, the steps in the method described above may not necessarily occur in the order depicted in the accompanying diagrams, and in some cases one or more of the steps depicted may occur substantially simultaneously, or additional steps may be involved. Although specific terms are employed herein, they are used in a generic and descriptive sense only and not for purposes of limitation.

While various embodiments in accordance with the principles disclosed herein have been shown and described above, modifications thereof may be made by one skilled in the art without departing from the spirit and the teachings of the disclosure. The embodiments described herein are representative only and are not intended to be limiting. Many variations, combinations, and modifications are possible and are within the scope of the disclosure. Alternative embodiments that result from combining, integrating, and/or omitting features of the embodiment(s) are also within the scope of the disclosure. Accordingly, the scope of protection is not limited by the description set out above.

Additionally, the section headings used herein are provided for consistency with the suggestions under 37 C.F.R. 1.77 or to otherwise provide organizational cues. These headings shall not limit or characterize the invention(s) set out in any claims that may issue from this disclosure.

Use of broader terms such as "comprises," "includes," and "having" should be understood to provide support for narrower terms such as "consisting of," "consisting essentially of," and "comprised substantially of' Use of the terms "optionally," "may," "might," "possibly," and the like with respect to any element of an embodiment means that the element is not required, or alternatively, the element is required, both alternatives being within the scope of the embodiment(s). Also, references to examples are merely provided for illustrative purposes, and are not intended to be exclusive.

## Claims

1. A battery pack comprising:
a wireless power receiver;
a battery electrically connected to the wireless power receiver; and
a processor electrically connected to the wireless power receiver;
wherein the processor configures an electrical output of the wireless power receiver, based at least in part on a charge level of the battery, such that an output voltage and an output current are updated in coordination with a predetermined charging profile.

2. The battery pack of Claim 1, further comprising a housing, wherein the housing encloses the battery, the processor, and the wireless power receiver.

3. The battery pack of Claim 1, wherein the predetermined charging profile is selected based on a chemical composition of the battery.

4. The battery pack of Claim 1, wherein the predetermined charging profile comprises at least a constant current stage and a constant voltage stage.

5. The battery pack of Claim 4, wherein the constant current stage comprises at least a first constant current stage and a second constant current stage, wherein a first current supplied to the battery in the first constant current stage is less than a second current supplied to the battery in the second constant current stage.

6. The battery pack of Claim 1, wherein an operating power is supplied to the processor that is not regulated by a low-dropout voltage regulator.

7. The battery pack of Claim 6, wherein the operating power supplied to the processor is supplied by the battery.

8. The battery pack of Claim 1, wherein the processor transmits control messages to the wireless power receiver to regulate the output voltage and the output current supplied by the wireless power receiver to the battery.

9. A computer program product for controlling battery charging, the computer program product comprising at least one non-transitory computer-readable storage medium having computer-readable program code portions stored therein, the computer-readable program code portions comprising an executable portion configured to:
receive, at a processor, a charge value corresponding to a charge level of a battery;
determine a charge state according to a predetermined charging profile, corresponding to the charge value;
determine an output voltage and an output current based at least in part on the charge value and the predetermined charging profile; and
configure an electrical output of a wireless power receiver, to produce power according to the output voltage and output current.

10. The computer program product of Claim 9, wherein the predetermined charging profile comprises at least a constant current stage and a constant voltage stage,
wherein the constant current stage comprises at least a first constant current stage and a second constant current stage, wherein a first current supplied to the battery in the first constant current stage is less than a second current supplied to the battery in the second constant current stage, and
wherein the constant voltage stage comprises reducing the output current of the wireless power receiver to maintain a constant output voltage.

11. A method for controlling battery charging in a wireless battery pack, the method comprising:
receiving, at a processor, a charge value corresponding to a charge level of a battery;
determining a charge state according to a predetermined charging profile, corresponding to the charge value;
determining an output voltage and an output current based at least in part on the charge value and the predetermined charging profile; and
configuring an electrical output of a wireless power receiver, to produce power according to the output voltage and output current.

12. The method of Claim 11, wherein the predetermined charging profile comprises at least a constant current stage and a constant voltage stage, and
wherein the constant current stage comprises at least a first constant current stage and a second constant current stage, wherein a first current supplied to the battery in the first constant current stage is less than a second current supplied to the battery in the second constant current stage.

13. The method of Claim 12, wherein the constant voltage stage comprises reducing the output current of the wireless power receiver to maintain a constant output voltage.

14. The method of Claim 11, wherein an operating power is supplied to the processor that is not regulated by a low-dropout voltage regulator.

15. The method of Claim 14, wherein the operating power supplied to the processor is provided by the battery.
